# EUROPÄISCHE PATENTANMELDUNG

(11) **EP 4 050 268 A1**
(43) Veröffentlichungstag der Anmeldung: **31.08.2022**
(21) Anmeldenummer: 21210932.6
(22) Anmeldetag: 29.11.2021
(51) Int. Cl.: F24D 11/02, F25B 30/06, F28D 20/00, F24F 5/00

(54) **ANLAGE ZUR BEAUFSCHLAGUNG WENIGSTENS EINES HEIZKREISES MIT ERDWÄRME**

(30) Priorität: 25.02.2021 AT 501302021
(71) Anmelder: Weimann, Rudolf, 4222 Sankt Georgen an der Gusen (AT)
(72) Erfinder: Weimann, Rudolf, 4222 Sankt Georgen an der Gusen (AT)
(74) Vertreter: Hübscher & Partner Patentanwälte GmbH

(57) **Zusammenfassung**

Es wird eine Anlage zur Beaufschlagung wenigstens eines Heizkreises mit Erdwärme mit einem Eisspeicher (1) und mit einem Solekreis (8) zwischen einer Wärmepumpe (11) und wenigstens einem im Eisspeicher (1) angeordneten Wärmetauscher (5) beschrieben. Um die Erdwärme vorteilhaft nützen zu können, wird vorgeschlagen, dass der Solekreis (8) einen an die Wärmepumpe (11) angeschlossenen, durch den Wärmetauscher (5) im Eisspeicher (1) ladbaren Solespeicher (7) umfasst und dass die Wärmepumpe (11) einen Ladekreis für einen mit dem Heizkreis verbundenen Pufferspeicher (12) bildet, der einen mithilfe eines Umschaltventils (20) an den Solekreis (8) anschließbaren Wärmetauscher (18) aufweist.

## Beschreibung

Die Erfindung bezieht sich auf eine Anlage zur Beaufschlagung wenigstens eines Heizkreises mit Erdwärme mit einem Eisspeicher und mit einem Solekreis zwischen einer Wärmepumpe und wenigstens einem im Eisspeicher angeordneten Wärmetauscher.

Da beim Phasenwechsel von Wasser zu Eis Kristallisationsenergie in einem Ausmaß frei wird, das der für das Auftauen benötigten Energiemenge entspricht, können Eisspeicher in Verbindung mit Wärmepumpen vorteilhaft als Energiespeicher eingesetzt werden, dem die zum Heizen und zur Warmwasserbereitung benötigte Energie durch die Wärmepumpe entzogen wird. Übersteigt die dem Eisspeicher entnommene Wärmemenge die dem ins Erdreich eingebetteten Eisspeicher zugeführte Erdwärme, so muss der Eisspeicher durch zusätzliche Zufuhr von Wärmeenergie regeneriert werden. Der Wasserinhalt des Eisspeichers steht somit als Wärmequelle weitgehend zur Verfügung.

Um die latente Wärme von Eisspeichern vorteilhaft nützen zu können, ist es bekannt (DE 10 2019 111 173 A1), mithilfe der mit einem Eisspeicher zusammenwirkenden Wärmepumpe eine weitere Wärmepumpe zu betreiben, sodass durch die dadurch bedingte zweistufige Temperaturerhöhung für die beiden Wärmepumpen günstige Betriebsbedingungen eingehalten werden können. Nachteilig ist allerdings, dass zum Regenerieren des Eisspeichers gesonderte Wärmetauscher eingebaut werden müssen, denen Sonnenwärme, Erdwärme oder Luftwärme zugeführt wird.

Der Erfindung liegt somit die Aufgabe zugrunde, die in einem Eisspeicher gespeicherte Erdwärme mithilfe einer Wärmepumpe vorteilhaft für einen Heizkreis zu nützen, und zwar mit vergleichsweise einfachen konstruktiven Maßnahmen.

Ausgehend von einer Anlage der eingangs geschilderten Art löst die Erfindung die gestellte Aufgabe dadurch, dass der Solekreis einen an die Wärmepumpe angeschlossenen, durch den Wärmetauscher im Eisspeicher ladbaren Solespeicher umfasst und dass die Wärmepumpe einen Ladekreis für einen mit dem Heizkreis verbundenen Pufferspeicher bildet, der einen mithilfe eines Umschaltventils an den Solekreis anschließbaren Wärmetauscher aufweist.

Da die Wärmepumpe über den Solekreis nicht unmittelbar, sondern über einen Solespeicher an den Wärmetauscher im Eisspeicher angeschlossen ist, kann die je nach den Betriebsbedingungen in diesem Solespeicher gespeicherte Wärmeenergie zusätzlich genützt werden, wodurch ein Ausgleich zwischen der dem Eisspeicher entnommenen und der durch die Wärmepumpe bereitzustellenden Wärmeenergie unterstützt wird. Diesem Ausgleich dient auch der von der Wärmepumpe geladene Pufferspeicher, aus dem die für den angeschlossenen Heizkreis benötigte Wärmeenergie entnommen wird. Wärmeenergie aus dem Pufferspeicher kann aber auch zum Regenerieren des Eisspeichers genützt werden. Zu diesem Zweck ist im Pufferspeicher ein Wärmetauscher vorgesehen, der durch ein Umschaltventil an den Solekreis angeschlossen wird. Die Sole, üblicherweise mit Glykol versetztes Wasser, wird im Wärmetauscher des Pufferspeichers erwärmt und gibt über den Wärmetauscher des Eisspeichers Wärme an das diesen Wärmetauscher umschließende Eis mit der Wirkung ab, dass das Eis im Bereich des Wärmetauschers auftaut und die dabei gespeicherte Wärme bei Bedarf wieder über den Wärmetauscher entnommen werden kann. Für die Regeneration des Eisspeichers bedarf es demnach keines zusätzlichen, an eine gesonderte Wärmequelle angeschlossenen Wärmetauschers innerhalb des Eisspeichers und keines mit dem Betrieb eines solchen zusätzlichen Wärmtauschers verbundenen Systemaufwands.

Besonders vorteilhafte Konstruktionsbedingungen ergeben sich, wenn der Wärmetauscher im Eisspeicher wenigstens eine gewendelte Wellrohrschlange aufweist. Solche Wärmetauscher bringen vergleichsweise große Wärmetauschflächen mit sich und können in einfacher Weise an den Querschnitt des Eisspeichers angepasst werden. Um entsprechend große Wärmetauschflächen zur Verfügung zu stellen, kann die Wellrohrschlange des Wärmetauschers mehrlagig gewickelt sein. Es ist aber auch möglich mehrere gewendelte Wellrohrschlangen über den Querschnitt des Eisspeichers zu verteilen.

Da in das Wasser des Eisspeichers Erdwärme eingetragen wird, braucht zur Errichtung eines Eisspeichers lediglich eine mit Wasser füllbare Kammer im Erdreich vorgesehen zu werden, sodass sich aufwendige Konstruktion erübrigen. Einfache, umweltfreundliche Verhältnisse werden geschaffen, wenn der Eisspeicher als Regenwasserzisterne ausgebildet ist, mit deren Hilfe auch die Wärme des eingetragenen Regenwassers genützt werden kann.

Zur Regeneration des Eisspeichers können auch zusätzliche Wärmequellen ohne besonderen Mehraufwand herangezogen werden, weil zu diesem Zweck lediglich der Solespeicher mit Wärmeenergie aus der zusätzlichen Wärmequelle zu beaufschlagen ist. Die Sole, die durch die in den Solespeicher eingetragene Wärme erwärmt wird, gibt beim Durchströmen des Wärmetauschers im Eisspeicher die aufgenommene Wärme an das den Wärmetauscher umgebende Eis ab, das demzufolge auftaut und die abgegebene Wärmeenergie speichert. Als zusätzliche Wärmequelle kommt bevorzugt Sonnenenergie in Frage, die mithilfe eines Sonnenkollektors gewonnen wird, der vorteilhafterweise mit der Sole beaufschlagt wird, sodass die Sole im Kreislauf zwischen dem Sonnenkollektor und dem Solespeicher geführt werden kann. Es entfallen daher gesonderte Wärmetauscher, über die sonst die zusätzliche Wärmeenergie in den Solespeicher eingetragen werden müsste.

In der Zeichnung ist der Erfindungsgegenstand beispielsweise dargestellt. Es zeigen
- Fig. 1: eine erfindungsgemäße Anlage zur Beaufschlagung wenigstens eines Heizkreises mit Erdwärme in einem vereinfachten, schematischen Blockschaltbild und
- Fig. 2: eine der Fig. 1 entsprechende Darstellung einer Ausführungsvariante einer erfindungsgemäßen Anlage.

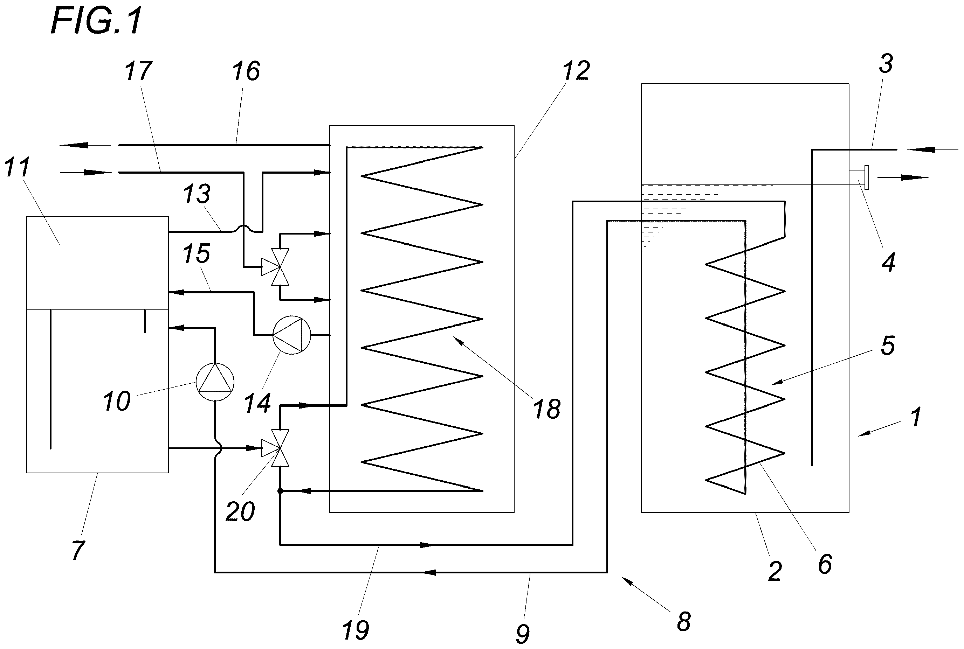

Zur Ausnützung der Erdwärme ist gemäß der Fig. 1 ein Eisspeicher 1 in Form einer ins Erdreich eingebetteten Regenwasserzisterne 2 vorgesehen, die über einen Zulauf 3 mit Regenwasser gefüllt wird. Der Füllstand wird durch einen Überlauf 4 bestimmt. Innerhalb des Eisspeichers 1 ist ein mit einer Sole, beispielsweise mit Glykol versetztes Wasser, beaufschlagbarer Wärmetauscher 5 in Form einer gewendelten Wellrohrschlange 6 vorgesehen. Der Wärmtauscher 5 ist mit einem Solespeicher 7 zu einem Solekreis 8 verbunden, dessen den Solespeicher 7 ladender Vorlauf 9 mit einer Kreislaufpumpe 10 versehen ist.

An den Solespeicher 7 ist eine Wärmepumpe 11 angeschlossen, mit deren Hilfe ein Pufferspeicher 12 für Heizungswasser geladen wird. Der Vorlauf des Ladekreises zwischen Wärmepumpe 11 und Pufferspeicher 12 ist mit 13, der mit einer Ladepumpe 14 versehene Rücklauf mit 15 bezeichnet. Der vom Pufferspeicher 11 ausgehende Vorlauf 16 für das Heizungswasser aus dem Pufferspeicher 12 ist mit einem Heizungsverteiler verbunden, über den gegebenenfalls mehrere Heizkreise mit Heizungswasser beaufschlagt werden können. Der vom Heizungsverteiler kommende Rücklauf 17 mündet über zwei durch ein Schaltventil in Abhängigkeit von der Rücklauftemperatur wahlweise ansteuerbare Anschlüsse in unterschiedlichen Höhen in den Pufferspeicher 12.

Im Pufferspeicher 12 selbst ist ein Wärmetauscher 18 angeordnet, der in den Rücklauf 19 des Solekreises 8 mittels eines Umschaltventils 20 eingebunden werden kann. Ist der Wärmetauscher18 im Pufferspeicher 12 über das Schaltventil 20, z. B. ein Dreiwegeventil, in den Solekreis 8 eingebunden, so wird die im Pufferspeicher 12 erwärmte Sole durch den Wärmetauscher 5 im Eisspeicher 1 mit der Wirkung gefördert, dass in den Eispeicher 1 Wärme zur Regeneration eingetragen wird, wobei bei einer entsprechenden Systemabstimmung die Vorlauftemperatur des Solekreises 8 angenähert beibehalten werden kann, sodass sich die Temperaturverhältnisse im Solespeicher 7 nicht übermäßig ändern, was sich vorteilhaft auf die Beaufschlagung der angeschlossenen Wärmepumpe 11 auswirkt.

Im Heizbetrieb wird über den Wärmetauscher 5 dem Eisspeicher 1 Wärme entnommen und mit dieser Wärme die Wärmepumpe 11 beaufschlagt, mit deren Hilfe der Pufferspeicher 12 geladen wird. Übersteigt die dem Eisspeicher 1 entnommene Wärmemenge die dem Wasser des Eisspeichers 1 zugeführte Menge an Erdwärme, so kühlt das Wasser im Eisspeicher 1 ab und friert zu Eis, das sich um den Wärmetauscher 5 bildet. Die dabei freiwerdende Kristallisationsenergie verhindert ein Absinken der Eistemperatur, solange noch ausreichend Wasser vorhanden ist. Sinkt daher die Vorlauftemperatur um ein vorgegebenes Maß, muss der Eisspeicher 1 regeneriert werden, indem das Umschaltventil 20 betätigt und der Wärmetauscher 18 im Pufferspeicher 12 in den Solekreis 8 eingebunden wird, wie dies bereits beschreiben wurde. Mit einem von der Vorlauftemperatur des Solekreises 8 abhängigen Schalten des Umschaltventils 20 für den Wärmetauscher 18 im Pufferspeicher 12 kann demnach der Eisspeicher 1 in einfacher Weise gesteuert werden.

Es braucht wohl nicht besonders hervorgehoben zu werden, dass mithilfe der dargestellten Anlage nicht nur ein winterlicher Heizbetrieb, sondern auch ein sommerlicher Kühlbetrieb möglich ist. Zu diesem Zweck ist ja lediglich die Wärmepumpe 11 so anzusteuern, dass Wärme aus dem Pufferspeicher 12 entnommen und auf die Sole im Solespeicher 7 übertragen wird, um die erwärmte Sole zur Abkühlung durch den Wärmespeicher 5 im Eisspeicher 1 zu leiten. Die Überwärme der Sole wird dabei an das gespeicherte Regenwasser in der Regenwasserzisterne 2 übertragen und vom Regenwasser in das umgebende Erdreich abgeleitet.

Eine Kühlung kann aber auch ohne den Einsatz der Wärmepumpe 11 erreicht werden, wenn im Sommerbetrieb das Wasser des Eisspeichers 1 eine entsprechend niedrigere Temperatur als der Pufferspeicher 12 aufweist. In diesem Fall kann nämlich die im Kreislauf über den Solespeicher 7 gepumpte Sole durch den in den Solekreis 8 eingebundenen Wärmetauscher 18 des Pufferspeichers 12 geführt werden, um Wärme aus dem Pufferspeicher 12 in den Eisspeicher 1 auszutragen. Durch die mit der Sole aus dem Pufferspeicher 12 ausgetragene, über den Wärmetauscher 5 in das Wasser des Eisspeichers 1 eingeleitete und von diesem Wasser in das umgebende Erdreich abgeleitete Wärme wird der Pufferspeicher 12 mit der Wirkung entladen, dass das im Pufferspeicher 12 gelagerte Heizungswasser abkühlt und für den Kühlbetrieb der an den Pufferspeicher 12 angeschlossenen Heizkreise genützt werden kann.

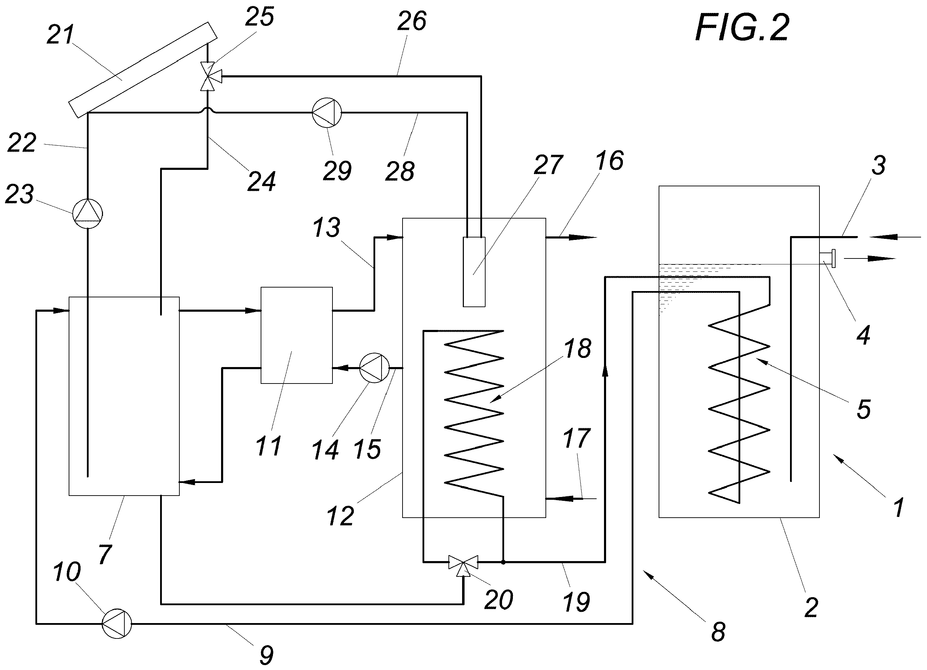

Die Ausführungsvariante einer erfindungsgemäßen Anlage entsprechend der Fig. 2 unterscheidet sich von der nach der Fig. 1 im Wesentlichen durch die zusätzliche Nutzung von Sonnenenergie mittels eines Sonnenkollektors 21, der mit Sole aus dem Solespeicher 7 beaufschlagt wird. In der Solezuleitung 22 ist eine Förderpumpe 23 vorgesehen. Von der Rückleitung 24 zweigt über ein Umschaltventil 25 eine Beaufschlagungsleitung 26 für einen im Pufferspeicher 12 angeordneten Wärmetauscher 27 ab, in dessen Rückleitung 28 eine Förderpumpe 29 angeordnet ist. Bei einer entsprechenden Schaltung des Umschaltventils 25 wird daher in üblicher Weise Wärmeenergie vom Sonnenkollektor 21 in den Pufferspeicher 12 eingetragen. In der anderen Schaltstellung des Umschaltventils 25 wird die Sonnenwärme in den Solespeicher 7 eingetragen, und zwar unmittelbar durch die in den Solespeicher 7 strömende, erwärmte Sole, sodass sich ein zusätzlicher Wärmetauscher erübrigt. Der mithilfe der Sonnenenergie aufgeladene Solespeicher 7 kann daher im Winterbetrieb vorteilhaft zur Regeneration des Eisspeichers 1 genützt werden, und zwar mit oder ohne Einbeziehung der im Pufferspeicher 12 gespeicherten Wärme, die bei Ausfall des Sonnenkollektors 21 zur Regeneration des Eisspeichers 1 zur Verfügung steht. Im Übrigen entspricht die Funktion der in der Fig. 2 dargestellten Anlage der der Anlage aus Fig. 1, sodass diesbezüglich auf die Beschreibung der Fig. 1 verwiesen wird.

## Patentansprüche

1. Anlage zur Beaufschlagung wenigstens eines Heizkreises mit Erdwärme mit einem Eisspeicher (1) und mit einem Solekreis (8) zwischen einer Wärmepumpe (11) und wenigstens einem im Eisspeicher (1) angeordneten Wärmetauscher (5), **dadurch gekennzeichnet, dass** der Solekreis (8) einen an die Wärmepumpe (11) angeschlossenen, durch den Wärmetauscher (5) im Eisspeicher (1) ladbaren Solespeicher (7) umfasst und dass die Wärmepumpe (11) einen Ladekreis für einen mit dem Heizkreis verbundenen Pufferspeicher (12) bildet, der einen mithilfe eines Umschaltventils (20) an den Solekreis (8) anschließbaren Wärmetauscher (18) aufweist.

2. Anlage nach Anspruch 1, **dadurch gekennzeichnet, dass** der Wärmetauscher (5) im Eisspeicher (1) wenigstens eine gewendelte Wellrohrschlange (6) aufweist.

3. Anlage nach Anspruch 2, **dadurch gekennzeichnet, dass** die Wellrohrschlange (6) des Wärmetauschers (5) mehrlagig gewickelt ist.

4. Anlage nach einem der Ansprüche 1 bis 3, **dadurch gekennzeichnet, dass** der Eisspeicher (1) als Regenwasserzisterne (2) ausgebildet ist.

5. Anlage nach einem der Ansprüche 1 bis 4, **dadurch gekennzeichnet, dass** der Solespeicher (7) mit Wärmeenergie aus einer zusätzlichen Wärmequelle beaufschlagbar ist.

6. Anlage nach Anspruch 5, **dadurch gekennzeichnet, dass** der Solespeicher (7) an einen mit der Sole beaufschlagbaren Sonnenkollektor (21) als Wärmequelle angeschlossen ist.
